# EUROPÄISCHE PATENTSCHRIFT

(11) **EP 3 254 166 B1**
(45) Veröffentlichungstag und Bekanntmachung des Hinweises auf die Patenterteilung: **05.09.2018**
(21) Anmeldenummer: 17704739.6
(22) Anmeldetag: 10.02.2017
(51) Int. Cl.: G05D 16/20, F16K 31/42, F15B 13/043, F16K 11/10, F15B 13/04

(54) **PROPORTIONALVENTIL**
PROPORTIONAL VALVE
VANNE PROPORTIONNELLE

(30) Priorität: 11.02.2016 DE 102016102388
(43) Veröffentlichungstag der Anmeldung: 13.12.2017
(73) Patentinhaber: Hoerbiger Automatisierungstechnik Holding GmbH, 86972 Altenstadt (DE)
(72) Erfinder: GRÖDL, Marcus, 87640 Altdorf (DE); SCHAIBLE, Jochen, 72213 Altensteig (DE); HALLER, Daniel, 70569 Stuttgart (DE); DYMEL, Collin, 70190 Stuttgart (DE); HILDEBRANDT, Benedikt, 70794 Filderstadt (DE); MOLNAR, Györg, 71111 Waldenbuch (DE); NEISS, Sebastian, 70197 Stuttgart (DE)
(74) Vertreter: Grättinger Möhring von Poschinger Patentanwälte Partnerschaft
(86) Internationale Anmeldenummer: PCT/EP2017/052977
(87) Internationale Veröffentlichungsnummer: WO 2017/137544

(56) Entgegenhaltungen:
- EP-A1- 2 237 128
- DE-A1- 19 904 901
- DE-A1-102012 017 713
- DE-A1-102012 017 714
- US-A1- 2009 309 052

## Beschreibung

Die vorliegende Erfindung betrifft ein Proportionalventil mit einem durch ein Steuersignal ansteuerbaren Vorsteuerventil und einem mittels des Vorsteuerventils betätigbaren Booster-Ventil, wobei das Proportionalventil einen Druckluftanschluss zum Anschluss einer Druckluftversorgung, einen Arbeitsanschluss und einen Entlüftungsanschluss aufweist.

Derartige Proportionalventile, die insbesondere zum Betätigen einer pneumatischen Armatur, eines pneumatischen Antriebs oder sonstiger pneumatischer Stellglieder Verwendung finden, sind in vielfältiger Weise aus dem Stand der Technik bekannt.

Als proportionales Ventil muss es dazu geeignet sein, an dem zum Anschluss der pneumatischen Armatur vorgesehenen Arbeitsanschluss einen möglichst präzise regelbaren (Luft-)Druck zur Verfügung zu stellen. Hierzu werden durch geeignete Betätigung des Ventils mittels des Vorsteuerventils typischerweise verschiedene Ventilstellungen angefahren, mit denen der Arbeitsanschluss wahlweise mit der Druckluftversorgung oder der Entlüftung fluidleitend gekoppelt oder - zum Halten eines am Arbeitsanschluss vorherrschenden Drucks - von beiden entkoppelt wird. Als proportionales Ventil sollen dabei auch Zwischenstellungen zwischen einem vollständigen Belüften und einem vollständigen Entlüften der am Arbeitsanschluss angeschlossenen Armatur möglich sein.

Proportionale Ventile der vorstehend genannten Art sind relativ aufwendig in ihrer Bauart und ihrem Betrieb.

Im Stand der Technik wird dabei häufig auf so genannte Schieberventile zurückgegriffen, bei denen wenigstens ein linear verschiebbares Ventilelement je nach seiner Stellung eine seitlich des Ventilelements angeordnete und den Luftstrom beeinflussende Öffnung entweder (vollständig oder teilweise) freigibt oder verschließt. Im Gegensatz zu Sitzventilen ist hierbei jedoch mangels eines den Fluidfluss wirksam sperrenden Dichtsitzes stets mit einer für präzise Anwendungsfälle nachteiligen Leckage zu rechnen, die im Rahmen der vorliegenden Erfindung vorteilhaft möglichst gering gehalten bzw. ganz vermieden werden sollte.

Aus der DE 10 2012 017 713 A1 ist darüber hinaus bereits ein gattungsgemäßes proportionales Ventil in Form eines Stellungsreglers bekannt, bei dem eine durch ein Vorsteuerventil betätigte Leistungsstufe (=Booster-Ventil) zwei federnd vorgespannte Sitzventile als Druck-Weg-Wandler umfasst, die von einem gemeinsamen Steuerraum aus mit Druck beaufschlagt werden und die bei Anstieg des im Steuerraum vorherrschenden Drucks sequentiell betätigt werden, um verschiedene Schaltzustände zu realisieren. Aufgrund der dort auf verschiedenen Seiten des gemeinsamen Steuerraums anzuordnenden Sitzventile benötigt der in der DE 10 2012 017 713 A1 beschriebene Stellungsregler einen nicht unerheblichen Bauraum, der mit der vorliegenden Erfindung reduziert werden soll.

In Zusammenhang mit der regelungstechnischen Ansteuerung von mit Sitzventilen ausgestalteten Proportionalventilen ist zu berücksichtigen, dass sich dabei - abhängig von der konkreten Bauart des Ventils - vergleichsweise komplexe Kennlinien ergeben können. Dies gilt insbesondere dann, wenn der zum Betätigen des Booster-Ventils benötigte Steuerdruck abhängig vom momentanen Arbeitsdruck am Arbeitsausgang des Ventils ist. Ferner kann bei Verwendung eines piezoelektrischen Vorsteuerventils ein hysteresebehafteter Zusammenhang zwischen dem Steuersignal und dem durch das Vorsteuerventil erzeugten Vorsteuerdruck entstehen, der auf die Kennlinie des Gesamtventils durchschlägt.

Aus der US 2,850,330 ist eine zur Verwendung in einem Bremssystem für Traktoren mit Anhänger vorgesehene Ventilgruppe bekannt, in welcher unter Realisierung von zwei Ventilen insgesamt drei einander nachgeschaltete, jeweils in einer axialen Richtung bewegliche und kaskadenartig verstellbare Ventilelemente vorgesehen sind. Dabei kann mittels des ersten Ventils ein erster Arbeitsanschluss für das Bremssystem des Anhängers wahlweise entlüftet oder mit einem traktorseitigen Druckluftanschluss verbunden werden, während mit dem zweiten Ventil ein zweiter Notfallarbeitsanschluss für das Bremssystem des Anhängers wahlweise entlüftet oder mit einem zweiten traktorseitigen Notfalldruckluftanschluss verbunden werden kann. Bei Variation der Stellung des ersten Ventilelements wird dort von einem ersten Schaltzustand, bei welchem der jeweilige Arbeitsanschluss entlüftet ist, jeweils zu einem zweiten Schaltzustand übergegangen, bei welchem der jeweilige Arbeitsanschluss mit dem traktorseitigen Druckluftanschluss verbunden ist.

Vor diesem Hintergrund ist es die Aufgabe der vorliegenden Erfindung, ein verbessertes proportionales Ventil der eingangs genannten Art bereitzustellen, welches insbesondere einen möglichst geringen (seitlichen) Bauraum benötigt und dabei gleichzeitig auf besonders einfache Weise zuverlässig und präzise betreibbar ist.

Diese Aufgabe wird durch ein Proportionalventil nach Anspruch 1 gelöst. Bevorzugte Ausgestaltungen eines solchen Ventils ergeben sich aus den abhängigen Patentansprüchen und der nachfolgenden Beschreibung.

Das erfindungsgemäße Proportionalventil zeichnet sich neben den eingangs genannten Merkmalen dadurch aus, dass das Booster-Ventil drei einander nachgeschaltete und jeweils in einer axialen Richtung gegen eine Federkraft bewegliche Ventilelemente aufweist, nämlich
- ein durch das Vorsteuerventil betätigtes erstes Ventilelement,
- ein zweites Ventilelement, welches durch das erste Ventilelement betätigt wird und
- ein drittes Ventilelement, welches durch das zweite Ventilelement betätigt wird,
wobei in einer Grundstellung des Proportionalventils das erste, das zweite und das dritte Ventilelement paarweise voneinander beabstandet und innerhalb des Booster-Ventils ein zwischen dem ersten Ventilelement und dem zweiten Ventilelement wirksamer erster Dichtsitz und ein zwischen dem dritten Ventilelement und dem Gehäuse wirksamer zweiter Dichtsitz derart ausgebildet und angeordnet sind, dass bei Variation des das Vorsteuerventil ansteuernden Steuersignals (mit welchem der Schaltzustand des Vorsteuerventils und damit der vom Vorsteuerventil erzeugte Vorsteuerdruck verändert wird) und der hierdurch kaskadenartig bewirkten Verstellung der axialen Stellungen des ersten, zweiten und dritten Ventilelements verschiedene Schaltzustände zum Entlüften und Belüften des Arbeitsanschlusses und zum Halten eines am Arbeitsanschluss anliegenden Drucks einstellbar sind. Schließlich ist dabei noch erfindungsgemäß vorgesehen, dass ein die axiale Stellung des ersten Ventilelements erfassender Positionssensor vorgesehen ist und dass eine Steuereinheit des Proportionalventils derart eingerichtet ist, dass zur Berechnung des zur Erzielung eines gewünschten Schaltzustands des Booster-Ventils benötigten Steuersignals für das Vorsteuerventil das Messsignal des Positionssensors ausgewertet wird.

Anders als im weiter oben bereits genannten Stand der Technik werden im Rahmen der vorliegenden Erfindung somit nicht zwei Sitzventile als Bestandteil je eines Druck-Weg-Wandlers durch den Druck in einem gemeinsamen Steuerraum betätigt, sondern es findet vorliegend eine kaskadenartige Verstellung der den Fluidfluss innerhalb des Ventils beeinflussenden Ventilelemente statt, bei der das erste Ventilelement durch das Vorsteuerventil und die dem ersten Ventilelemente nachgeschalteten Ventilelemente sukzessive - insbesondere rein mechanisch - durch das jeweils vorherige Ventilelement betätigt werden. Es ist evident, dass aufgrund der axialen Betätigungsrichtung für alle drei Ventilelemente der für ein erfindungsgemäßes Ventil benötigte Bauraum - insbesondere in einer seitlich zur axialen Bewegungsrichtung der Ventilelemente liegenden Richtung - besonders kompakt sein kann.

Ferner kann aufgrund des Umstands, dass innerhalb des Ventils zwei mit jeweils mindestens einem Ventilelement zusammenwirkende Dichtsitze realisiert sind, ein besonders leckagearmer bzw. leckagefreier Betrieb gewährleistet werden, was insbesondere zum Halten eines am Arbeitsanschluss vorherrschenden Drucks von großem Vorteil ist und den pneumatischen Energieverbrauch des Ventils minimal hält. Trotz der hierdurch entstehenden Hysterese-Effekte, die weiter unten im Rahmen der Figurenbeschreibung noch näher erläutert werden, lässt sich ein erfindungsgemäßes Ventil unter Verwendung des erfindungsgemäß vorgesehenen Positionssensors mit besonders hoher Regelgüte in einfacher Weise betreiben.

Bei dem das Vorsteuerventil ansteuernden Steuersignal kann es sich beispielsweise um eine Steuerspannung handeln, wobei selbstverständlich auch die Verwendung andersartiger Steuersignale (z.B. in Form von PWM-Signalen) in Frage kommt.

Zur Berechnung der zur Erzielung oder Beibehaltung eines gewünschten Schaltzustands des Booster-Ventils benötigten Variation des Steuersignals für das Vorsteuerventil wird erfindungsgemäß das Messsignal eines Positionssensors ausgewertet, der die axiale Stellung bzw. Position des ersten Ventilelements, also den Ventilhub, erfasst. Das Gesamtventil erweist sich dabei trotz eines (in regelungstechnischer Hinsicht) vergleichsweise komplexen Ventilaufbaus mit kaskadenartiger Verstellung von wenigstens drei federvorgespanten Ventilelementen als in besonders einfacher Weise ansteuerbar. Dies ist möglich, da bei dem erfindungsgemäßen Ventil der konkret eingenommene Schaltzustand des Gesamtventils letztlich (ausschließlich) durch die aktuelle Position des ersten Ventilelements bestimmt ist. Mit Ermittlung der Position des ersten Ventilelements liegt somit die wesentliche Information zum aktuellen Schaltzustand des Ventils vor.

Selbstverständlich greift die Steuereinheit des Proportionalventils im Rahmen der Berechnung des jeweils benötigten Steuersignals (d.h. z.B. der neu einzustellenden Steuerspannung für das Vorsteuerventil) in bevorzugter Weise auf geeignet in einer Speichereinheit hinterlegte Werte zurück, mit denen einer bestimmten axialen Stellung des ersten Ventilelements (bzw. dem hierzu korrespondierenden Messsignal des Positionssensors) der hierdurch jeweils realisierte Ventilzustand des Booster-Ventils zugeordnet ist.

Prinzipiell kann im Rahmen der vorliegenden Erfindung auf einen rein mechanischen Positionssensor zurückgegriffen werden. Als besonders vorteilhaft erweist es sich jedoch, wenn der Positionssensor zur berührungslosen Messung der axialen Stellung des ersten Ventilelements eingerichtet ist. Dabei kann dann in besonders zweckmäßiger Ausgestaltung vorgesehen sein, dass der Positionssensor auf einem optischen, kapazitiven oder magnetischen Messprinzip basiert.

Als besonders vorteilhaft erweist sich dabei die Verwendung eines Magnetfeldwinkelsensors als Positionssensor, der vorteilhaft als AMR-, TMR- oder GMR-Sensor ausgestaltet sein kann.

AMR-Sensoren nutzen dabei den so genannten anisotropen magnetoresistiven (=AMR-) Effekt. TMR- und GMR-Sensoren nutzen den magnetischen Tunnelwiderstand (engl: magnetic tunnel resistance = TMR) bzw. den so genannten Riesenmagnetwiderstand (engl: giant magnetoresistance = GMR). Da auf diesen Prinzipien arbeitende Sensoren dem Grunde nach aus dem Stand der Technik hinlänglich bekannt und kommerziell erhältlich sind, darf auf eine weitergehende Erläuterung der verschiedenen Messprinzipien verzichtet werden. Entscheidend ist im Kontext der vorliegenden Erfindung, dass mit den vorstehend genannten Sensortypen mit hoher Energieeffizienz insbesondere hochpräzise Messergebnisse erzielbar sind.

Wie bereits weiter oben andiskutiert, kann in besonders bevorzugter Ausgestaltung der Erfindung vorgesehen sein, dass die Steuereinheit des Proportionalventils derart eingerichtet ist, dass das zur Erzielung eines gewünschten Schaltzustands des Booster-Ventils benötigte Steuersignal für das Vorsteuerventil unter ausschließlichem Rückgriff auf das Messsignal des Positionssensors berechnet wird. Mit anderen Worten lässt sich ein erfindungsgemäßes Ventil also vorteilhaft so betreiben, dass zur hochpräzisen Ansteuerung des Ventils keine weiteren Messsignale als diejenigen des Positionssensors benötigt werden.

Zur konkreten Ausgestaltung des Ventils kann vorteilhaft vorgesehen sein, dass das erste Ventilelement durch einen Membranteller mit einem sich in axialer Richtung erstreckenden und eine axiale Bohrung aufweisenden Membrantellerschaft gebildet ist. Das zweite Ventilelement kann vorteilhaft durch einen federnd in einer zum Membranteller weisenden Richtung vorgespannten Ventilstößel gebildet sein, der auf einer zum Membrantellerschaft weisenden Stirnseite einen ersten Dichtsitz für das freie Ende des daran zur Anlage bringbaren Membrantellerschafts aufweist. Das dritte Ventilelement kann vorteilhaft durch ein Sockelelement gebildet sein, das in einer zum Ventilstößel weisenden Richtung federnd gegen einen zweiten Dichtsitz vorgespannt ist und durch axiale Verschiebung des am Sockelelement zur Anlage gebrachten Ventilstößels von dem zweiten Dichtsitz abhebbar ist. Hierdurch lässt sich ein besonders kompakter Ventilaufbau erreichen, wie dies weiter unten anhand eines Ausführungsbeispiels der vorliegenden Erfindung noch näher erläutert ist.

Da ein auf einem magnetischen Messprinzip basierender Positionssensor zur Messung der axialen Stellung des ersten Ventilelements selbstverständlich mit einem geeignet am ersten Ventilelement vorgesehenen Magnetelement zusammenwirken muss, kann in bevorzugter Ausgestaltung der Erfindung vorgesehen sein, dass der Positionssensor mit einem in den Membranteller integrierten Magnetelement zusammenwirkt.

In abermals bevorzugter Weiterbildung der vorliegenden Erfindung kann vorgesehen sein, dass eine den ersten und/oder zweiten Dichtsitz bildende und/oder hiermit zusammenwirkende Oberfläche zur Feinregulierung des Fluidstroms aus einem polymeren Material besteht, insbesondere mit vom jeweiligen Dichtungspartner ggf. abweichendem elastischem Verhalten. Hierdurch lassen sich besonders feine Übergänge in Bezug auf die für einen Proportionalbetrieb des Ventils benötigten Zwischenstellungen des erfindungsgemäßen Proportionalventils erzielen.

In schaltungstechnischer Hinsicht kann schließlich bevorzugt vorgesehen sein, dass das Vorsteuerventil, bei dem es sich in vorteilhafter Weise um ein piezoelektrisches Vorsteuerventil handeln kann, ein 3/2-Wegeventil ist. Das Booster-Ventil kann vorteilhaft als 3/3-Wegeventil ausgestaltet sein.

Nachfolgend wird ein Ausführungsbeispiel eines erfindungsgemäßen Ventils anhand der Zeichnung näher erläutert. Dabei zeigt
- Fig. 1: eine schematische Ansicht eines erfindungsgemäßen Proportionalventils und seiner Komponenten und die
- Fig. 2 - 4: drei verschiedene Diagramme zu verschiedenen Kennlinien eines erfindungsgemäßen Ventils zur Veranschaulichung der komplexen Zusammenhänge zwischen verschiedenen Ventilparametern.

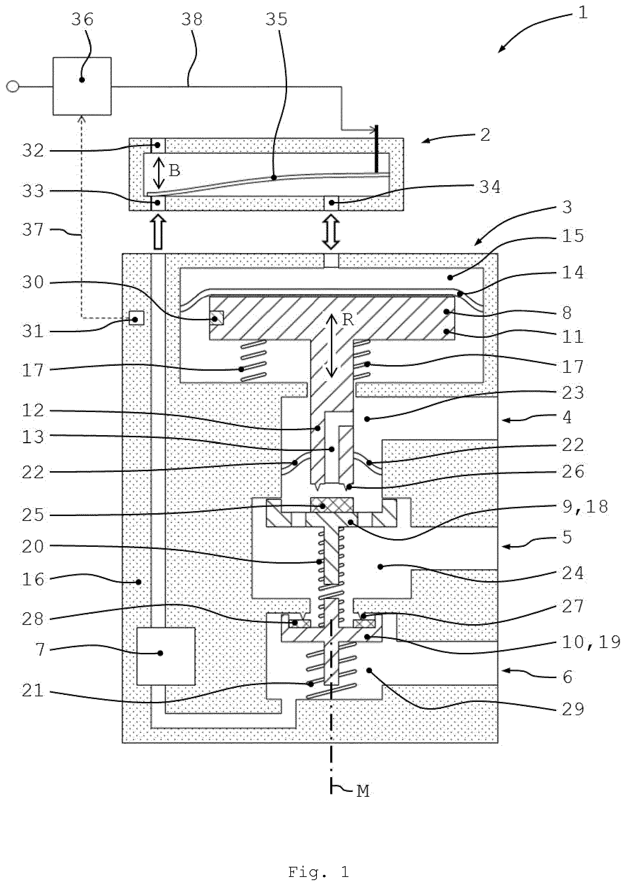

Fig. 1 zeigt ein Ausführungsbeispiel eines erfindungsgemäßen Proportionalventils 1, welches ein pneumatisches, piezoelektrisches Vorsteuerventil 2 als Vorstufe und ein Booster-Ventil 3 als Leistungsstufe aufweist.

Das Ventil 1 weist ferner einen Entlüftungsanschluss 4, einen Arbeitsanschluss 5 zum Anschluss einer mit dem Ventil 1 zu betätigenden pneumatischen Armatur (nicht dargestellt) und einen Anschluss 6 für eine Druckluftversorgung mit einem vorgegebenen Luftdruck von beispielsweise 8 bar auf. Ferner ist ein Druckregler 7 vorgesehen, mit welchem aus dem am Anschluss 6 für die Druckluftversorgung vorherrschenden Druck ein demgegenüber geringerer Druck von z.B. 1,2 bar als Eingangsdruck für das zur Betätigung des Booster-Ventils 3 vorgesehene pneumatische Vorsteuerventil 2 gewinnbar ist.

Das Ventil 1 weist ferner drei einander nachgeschaltete und jeweils in einer axialen Richtung gemäß Doppelpfeil R bewegliche Ventilelemente 8, 9, 10 auf.

Dabei umfasst das erste (in Fig. 1 oberste) Ventilelement 8 einen Membranteller 11 und einen Membrantellerschaft 12 mit einer axialen Bohrung 13.

Der Membranteller 11 steht in Wirkverbindung (vorliegend durch eine mechanische Kopplung) mit einer ersten Membran 14, wobei oberhalb der ersten Membran 14 und des Membrantellers 11 ein Steuerdruckraum 15 gebildet ist. Der im Steuerdruckraum 15 vorherrschende Luftdruck wird durch das Vorsteuerventil 2 erzeugt.

Ferner ist das erste (durch den Membranteller 11 samt Membrantellerschaft 12 gebildete) Ventilelement 8 in (axialer) Richtung zum Steuerdruckraum 15 hin federnd vorgespannt. Hierfür sind im vorliegenden Ausführungsbeispiel insgesamt drei am Gehäuse 16 des Ventils 1 abgestützte Federelemente (Federn) 17 vorgesehen, von denen in Fig. 1 lediglich eines (links der Mittelachse M) in der Schnittebene liegt, während die anderen beiden Federelemente 17 (von denen nur eines in Fig. 1 erkennbar ist) vor bzw. hinter der Schnittebene liegen. Diese drei Federelemente 17 sind jeweils äquidistant (also mit gleichem radialen Abstand) zur Mittelachse M angeordnet und in der senkrecht zur Mittelachse M gelegenen Ebene um einen paarweise gleichen Winkel α von 120° relativ zueinander (d.h. um die Mittelachse M herum) versetzt, so dass sich eine bezogen auf die axiale Mittelachse M vollkommen symmetrische Vorspannung des ersten Ventilelements 8 in Richtung zur Steuerdruckkammer 14 ergibt.

Das zweite Ventilelement 9 wird vorliegend durch einen Ventilstößel 18 und das dritte Ventilelement 10 durch ein Sockelelement 19 gebildet. Dabei ist der Ventilstößel 18 mittels einer sich am Sockelelement 19 abstützenden Feder 20 in Richtung zum ersten Ventilelement 8 (=Membranteller 11 und -schaft 12) vorgespannt, während das Sockelelement 19 seinerseits mittels einer sich am Gehäuse 16 abstützenden Feder 21 vorgespannt ist.

In der in Fig. 1 dargestellten Grundstellung des Ventils 1 sind alle drei axial beweglichen Ventilelemente 8, 9, 10 des Booster-Ventils 3 in gleicher Richtung vorgespannt, dabei jedoch paarweise voneinander beabstandet.

Der Membrantellerschaft 12 ist mit einer zweiten Membran 22 gekoppelt, die den Membrantellerschaft 12 umlaufend dicht umgibt und die den zwischen erster Membran 14 und zweiter Membran 22 befindlichen (dauerhaft entlüfteten) Entlüftungsraum 23, welcher zum Entlüftungsanschluss 4 führt, von einem zum Arbeitsanschluss 5 führenden Arbeitsdruckraum 24 abtrennt. Die zweite Membran 22 kann dabei gleichzeitig zur radialen Lagerung des Membrantellerschafts 12 dienen. Aufgrund des in der Grundstellung des Ventils 1 gegebenen Abstands zwischen dem freien Ende des Membrantellerschafts 12 und dem Ventilstößel 18 ist bei der in Fig. 1 dargestellten Ventilstellung der Arbeitsdruckraum 24 (und somit auch eine am Arbeitsanschluss 5 angeschlossene pneumatische Armatur) entlüftet.

Der Ventilstößel 18 weist auf seiner zum Membrantellerschaft 12 weisenden Oberseite ein als Dichtfläche 25 dienendes polymeres Material auf, an welcher eine Unterkante 26 des Membrantellerschafts 12 unter Bildung eines ersten Dichtsitzes zur Anlage kommen kann. Diese weiche Dichtfläche ermöglicht in Abhängigkeit von der Härte des Polymers eine besonders präzise proportionale Feinregelung bei Verstellung des Ventils in der Nähe des Kontaktbereichs.

Wenn also - durch geeignete Erhöhung des in der Steuerdruckkammer 15 vorherrschenden Drucks mittels des seinerseits durch eine (elektrische) Steuerspannung ansteuerbaren Vorsteuerventils 2 - das erste Ventilelement 8 so weit verschoben wird, bis die Unterkante 26 des Membrantellerschafts 12 an der Oberseite 25 des Ventilstößels 18 dichtend zur Anlage kommt, dann wird die durch die axiale Bohrung 13 des Membrantellerschafts 12 gegebene Verbindung zwischen Entlüftungsraum 23 und Arbeitsdruckraum 24 gesperrt, wodurch die vorherige Entlüftung des Arbeitsdruckraums 24 aufgehoben wird.

Ein zweiter Dichtsitz wird in dem gezeigten Ausführungsbeispiel eines erfindungsgemäßen Proportionalventils 1 gebildet durch eine gehäusefeste und in Fig. 1 nach unten weisende Dichtkante 27, gegen die das als drittes Ventilelement 10 fungierende Sockelelement 19 mittels der Feder 21 vorgespannt ist, wobei hier sockelelementseitig wiederum eine mit der Dichtkante 27 zur Bildung des zweiten Dichtsitzes zusammenwirkende Dichtfläche 28 aus einem polymeren Material vorgesehen ist. Unterhalb des zweiten Dichtsitzes befindet sich ein mit dem Anschluss 6 für die Druckversorgung verbundener Druckversorgungsraum 29, der somit genau dann vom Arbeitsdruckraum 24 fluidisch getrennt ist, wenn das Sockelelement 19 mit seiner Oberseite dicht an der Dichtkante 27 anliegt, wie dies in der gezeigten Grundstellung der Fall ist.

Erst wenn also - durch geeignete Betätigung des ersten Ventilelements 8 mittels des Vorsteuerventils 2 - das erste Ventilelement 8 so weit verschoben wurde, dass das erste Ventilelement 8 am zweiten Ventilelement 9 und das zweite Ventilelement 9 am dritten Ventilelement 10 anliegt, dann führt eine weitere Erhöhung des Steuerdrucks in der Steuerdruckkammer 15 dazu, dass das dritte Ventilelement 10 (=Sockelelement 19) vom zweiten Dichtsitz abgehoben wird, wodurch der Arbeitsdruckraum 24 fluidisch mit der Druckversorgung 6 verbunden, also der Druck am Arbeitsausgang 5 erhöht wird. Im Rahmen der Betätigung des dritten Ventilelements 10 ist im Übrigen von Vorteil, dass zwischen Ventilstößel 18 und Sockelelement 19 ein harter Anschlag ausgebildet ist.

Das besonders gute Regelverhalten eines erfindungsgemäßen Ventils ergibt sich nicht zuletzt auch aufgrund der im Grundzustand gegebenen Abstände zwischen dem ersten, zweiten und dritten Ventilelement 8, 9, 10, da hierdurch die verschiedenen fluidischen Zustände des Ventils 1 besonders gut differenzierbar und einfach ansteuerbar sind. Im Grundzustand ist der Arbeitsanschluss 5 des Ventils entlüftet. Wenn sodann das erste Ventilelement 8 so weit verschoben wurde, bis es unter Ausbildung eines Dichtsitzes 26 im Kontaktbereich mit dem zweiten Ventilelement 9 diesem dicht anliegt, dann ist der Zustand zum Halten eines am Arbeitsausgang 5 anliegenden Drucks erreicht, da in dieser Stellung das dritte Ventilelement 10 durch Anlage am zweiten Dichtsitz den Arbeitsdruckraum 24 vom Druckversorgungsraum 29 trennt. Erst wenn das zweite Ventilelement 9 durch weitere Verschiebung am dritten Ventilelement 10 zur Anlage gebracht wurde und das dritte Ventilelement 10 gegen seine Federvorspannung vom zweiten Dichtsitz 27 abgehoben wurde, ist der Ventilzustand zum Belüften des Arbeitsanschlusses 5 mit dem von der Druckversorgung 6 bereitgestellten Druck erreicht.

Die Regelung eines erfindungsgemäßen Ventils 1 erweist sich - trotz der kaskadenartigen Ausgestaltung - im Übrigen als besonders einfach. Hierzu kann am ersten Ventilelement 8 (z.B. im Bereich des Membrantellerrands) ein Magnetelement 30 vorgesehen sein, so dass unter Verwendung eines geeigneten magnetischen Positionssensors 31, insbesondere in Art eines AMR-, GMR- oder TMR-Sensors, die axiale Stellung des ersten Ventilelements 8 energieeffizient und präzise bestimmbar ist. Aus dieser Stellung kann unmittelbar auf den momentanen Ventilzustand geschlossen werden, ohne dass hierfür sonstige Messparameter bestimmt werden müssten. Bei Verwendung eines geeignet präzisen Positionssensors kann dabei insbesondere auch eine Feinregulierung des Ventils 1 in unmittelbarer Nähe derjenigen Stellungen erfolgen, an denen der Wechsel zwischen den verschiedenen Schaltzuständen des Ventils erfolgt.

Aufgrund der rein mechanischen Kopplung der drei Ventilelemente 8, 9, 10 und wegen der durch die Lage der Dichtsitze fix vorgegebenen Verfahrwege zwischen den verschiedenen Ventilstellungen, kann somit eine Regelung des Ventils 1 unter (ausschließlichem) Rückgriff auf die mittels des Positionssensors 31 ermittelte (axiale) Stellung des ersten Ventilelements 8 erfolgen, was nachfolgend noch anhand verschiedener Kennlinien des erfindungsgemäßen Ventils 1 erläutert wird.

Das pneumatische Vorsteuerventil 2 ist vorliegend als proportionales 3/2 Wegeventil ausgestaltet, während das Booster-Ventil 3 ein 3/3 Wegeventil ist.

Das Vorsteuerventil 2 selbst weist einen Druckeingang 33 auf, der vorliegend mit dem vom Druckregler 7 zur Verfügung gestellten Luftdruck bespeist ist. Ferner ist ein (ggfs. mit dem Entlüftungsanschluss 4 des Ventils 1 verbundener) Vorsteuerventilentlüftungsanschluss 32 vorgesehen, sowie ein Vorsteuerventilarbeitsausgang 34, der mit der Steuerdruckkammer 15 des Ventils 1 fluidisch verbunden ist.

Mittels eines elektrisch betätigbaren und hierdurch im Bereich seines freien Endes gemäß Doppelpfeil B verschwenkbaren Piezobiegewandlers 35 kann nun der Vorsteuerventilarbeitsausgang 34 wahlweise entlüftet (d.h. fluidisch mit dem Vorsteuerventilentlüftungsanschluss 32 verbunden) oder teilweise bzw. vollständig mit dem am Druckeingang 33 des Vorsteuerventils 2 vorherrschenden Druck verbunden werden. Das Vorsteuerventil 2 kann also mit besonders hoher Regelgüte und geringem Energiebedarf unter Regelung des in der Steuerdruckkammer 15 vorherrschenden Drucks zur Betätigung des ersten Ventilelements 8 des erfindungsgemäßen Ventils 1 dienen.

Ferner ist eine Steuereinheit 36 vorgesehen, welcher über eine Signalleitung 37 das Messsignal des Positionssensors 31 zugeführt wird. Die das Vorsteuerventil 2 (und damit das Proportionalventil 1 insgesamt) steuernde Steuereinheit 36 ist dazu eingerichtet, die zur Erzielung eines gewünschten Schaltzustands des Booster-Ventils 3 benötigte Steuerspannung für das Vorsteuerventil 2 zu berechnen und das Vorsteuerventil 2 über die Steuerleitung 38 entsprechend anzusteuern, wobei im Rahmen dieser Berechnung das Messsignal des Positionssensors (als bevorzugt einziger den Ventilzustand betreffender Messparameter) ausgewertet wird. Dabei wird also zunächst aus dem die Position des ersten Ventilelements 8 repräsentierenden Messwert (unter Vergleich mit auf geeignete Weise in der Steuereinheit 36 hinterlegten Eich- bzw. Kalibrierungsdaten) der aktuelle Ventilzustand bestimmt und sodann die Steuerspannung für das Vorsteuerventil 2 so geregelt, dass das erste Ventilelement 8 - je nach gewünschtem Ventilzustand - seine axiale Position hält oder diese zur Veränderung des Ventilzustands ändert.

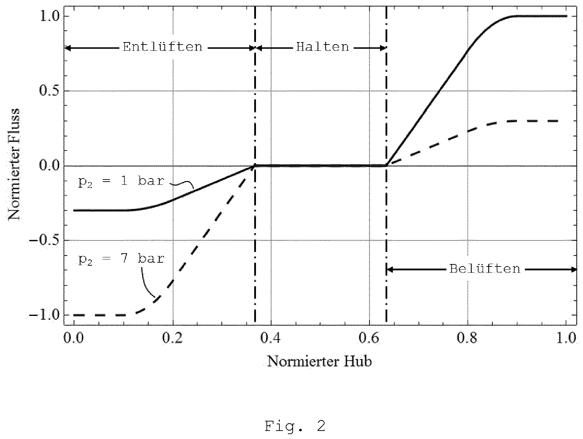

Fig. 2 zeigt die Durchflusscharakteristik des Booster-Ventils 3 am Arbeitsanschluss 5 als Funktion seines Hubs (also als Funktion der mittels des Positionssensors ermittelbaren axialen Stellung des ersten Ventilelements). Gezeigt sind zwei exemplarische Kurven für verschiedene Drücke p₂ am Arbeitsanschluss bei einem Druck von p₁ = 8bar an der Druckversorgung. Dabei werden nacheinander die drei Ventilstellungen durchlaufen, bei denen nacheinander der Arbeitsanschluss entlüftet (=negativer Durchfluss), der Druck gehalten (=kein Durchfluss), sowie der Arbeitsanschluss belüftet (=positiver Durchfluss) wird. Der Übergang zwischen den einzelnen Bereichen ist nahezu unabhängig vom Druck am Arbeitsanschluss. Eine (minimale) Druckabhängigkeit ergibt sich allenfalls durch die vom Druck abhängige Komprimierung der aus einem polymeren Material gebildeten Ventilsitze, so dass hier nur ein unwesentlicher Einfluss auf die Bereichsübergänge besteht. Im Gegensatz zu einer typischerweise in Proportionalventilen verwendeten Leistungsstufe mit Schieberaufbau ermöglicht die vorliegend zur Verwendung kommende Ventilgeometrie unter Ausbildung von zwei Dichtsitzen eine deutlich verbesserte Dichtheit des Ventils, so dass im Haltebereich der Druck am Arbeitsanschluss auch über lange Zeit gehalten werden kann.

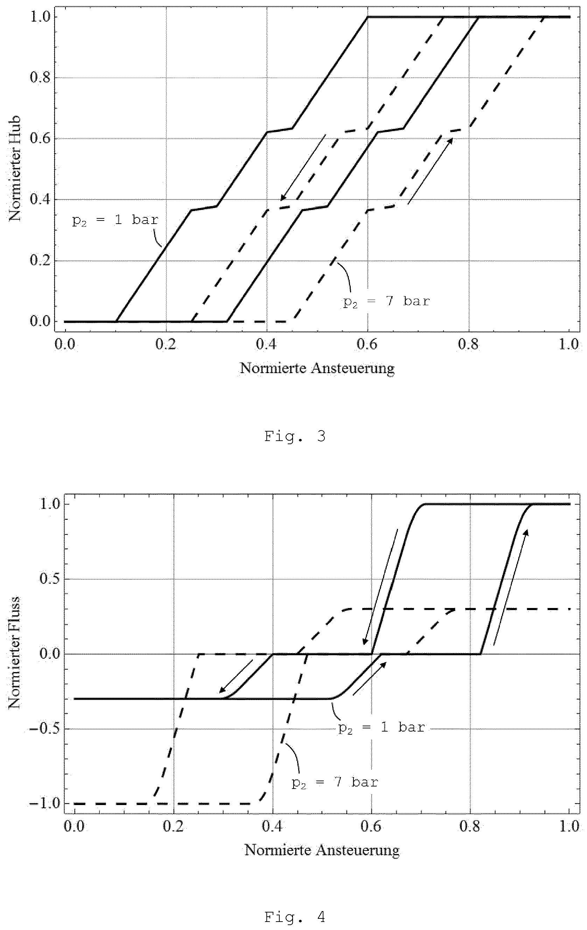

Fig. 3 zeigt nun die Hubkennlinie des Booster-Ventils eines erfindungsgemäßen Proportionalventils als Funktion der am Vorsteuerventil anliegenden Steuerspannung (jeweils in normierten Einheiten) bei zwei verschiedenen Arbeitsdrücken p₂ = 1 bar und p₂ = 7 bar, wobei p₁ = 8 bar den durch die Druckversorgung 6 bereitgestellten Druck repräsentiert. Dabei zeigt sich einerseits eine deutliche Hysterese im Ansteuersignal und andererseits eine starke Abhängigkeit vom Arbeitsdruck.

Die Druckabhängigkeit wird aufgrund der konkreten Ventilgeometrie verursacht, die zu einer mit dem Arbeitsdruck steigenden Kraft entgegen der Aktuierungsrichtung des Ventils führt. Somit ist bei hohem Arbeitsdruck ein entsprechend höherer Steuerdruck notwendig, um das Booster-Ventil zu betätigen, als dies bei einem niedrigeren Arbeitsdruck der Fall ist. Die Hysterese der Kennlinie wird durch die piezoelektrische und fluidische Hysterese des Vorsteuerventils verursacht.

Fig. 4 zeigt die Gesamtkennlinie des Durchflusses des Booster-Ventils als Funktion der Ansteuerspannung, wiederum für zwei verschieden Drücke p₂ = 1 bar und p₂ = 7 bar am Arbeitsanschluss bei einem Druck von p₁ = 8 bar an der Druckversorgung. Die Hysterese der Steuerspannung führt dazu, dass sich die einzelnen Ventilstellungen nicht mehr auf einen eindeutigen Ansteuerbereich im Stellsignal zurückführen lassen. Deutlich erschwert wird dies noch durch die Druckabhängigkeit.

Die Kennlinien aus Fig. 3 und 4 zeigen somit, dass eine druckabhängige Regelung eines erfindungsgemäßen Proportionalventils außerordentlich problematisch wäre. Die Kennlinie aus Fig. 2 veranschaulicht demgegenüber, dass unter Rückgriff auf das den Ventilhub kennzeichnende Messsignal des Positionssensors eine besonders einfache Ventilregelung ermöglicht ist.

## Patentansprüche

1. Proportionalventil (1) mit einem durch ein Steuersignal ansteuerbaren Vorsteuerventil (2) und einem mittels des Vorsteuerventils (2) betätigbaren Booster-Ventil (3),
wobei das Proportionalventil (1) einen Druckluftanschluss (6) zum Anschluss einer Druckluftversorgung, einen Arbeitsanschluss (5) und einen Entlüftungsanschluss (4) aufweist,
wobei das Booster-Ventil (3) drei einander nachgeschaltete und jeweils in einer axialen Richtung gegen eine Federkraft bewegliche Ventilelemente (8, 9, 10) aufweist, nämlich
- ein durch das Vorsteuerventil (2) betätigtes erstes Ventilelement (8),
- ein zweites Ventilelement (9), welches durch das erste Ventilelement (2) betätigt wird, und
- ein drittes Ventilelement (10), welches durch das zweite Ventilelement (9) betätigt wird,
wobei in einer Grundstellung des Proportionalventils (1) das erste, das zweite und das dritte Ventilelement (8, 9, 10) paarweise voneinander beabstandet und innerhalb des Booster-Ventils (3) ein zwischen dem ersten Ventilelement (8) und dem zweiten Ventilelement (9) wirksamer erster Dichtsitz (26) und ein zwischen dem dritten Ventilelement (10) und dem Gehäuse (16) wirksamer zweiter Dichtsitz (27) derart ausgebildet und angeordnet sind,
wobei bei Variation des das Vorsteuerventil (2) ansteuernden Steuersignals und der hierdurch kaskadenartig bewirkten Verstellung der axialen Stellungen des ersten, zweiten und dritten Ventilelements (8, 9, 10) verschiedene Schaltzustände zum Entlüften und Belüften des Arbeitsanschlusses (5) und zum Halten eines am Arbeitsanschluss (5) anliegenden Drucks einstellbar sind,
wobei ferner ein die axiale Stellung des ersten Ventilelements (8) erfassender Positionssensor (31) vorgesehen ist und eine Steuereinheit (36) des Proportionalventils (1) derart eingerichtet ist, dass zur Berechnung des zur Erzielung eines gewünschten Schaltzustands des Booster-Ventils (2) benötigten Steuersignals für das Vorsteuerventil (2) das Messsignal des Positionssensors (31) ausgewertet wird.

2. Proportionalventil nach Anspruch 1,
**dadurch gekennzeichnet,**
**dass** der Positionssensor (31) zur berührungslosen Messung der axialen Stellung des ersten Ventilelements eingerichtet ist.

3. Proportionalventil nach Anspruch 2,
**dadurch gekennzeichnet,**
**dass** der Positionssensor (31) auf einem optischen, kapazitiven oder magnetischen Messprinzip basiert.

4. Proportionalventil nach Anspruch 3,
**dadurch gekennzeichnet,**
**dass** der Positionssensor (31) ein Magnetfeldwinkelsensor ist.

5. Proportionalventil nach Anspruch 4,
**dadurch gekennzeichnet,**
**dass** der Positionssensor (31) ein AMR-, TMR- oder GMR-Sensor ist.

6. Proportionalventil nach einem der vorangehenden Ansprüche,
**dadurch gekennzeichnet,**
**dass** die Steuereinheit (36) des Proportionalventils (1) derart eingerichtet ist, dass das zur Erzielung eines gewünschten Schaltzustands des Booster-Ventils (3) benötigte Steuersignal für das Vorsteuerventil (2) unter ausschließlichem Rückgriff auf das Messsignal des Positionssensors (31) berechnet wird.

7. Proportionalventil nach einem der vorangehenden Ansprüche,
**dadurch gekennzeichnet,**
**dass** das erste Ventilelement (8) durch einen Membranteller (11) mit einem sich in axialer Richtung erstreckenden und eine axiale Bohrung (13) aufweisenden Membrantellerschaft (12) gebildet ist, dass das zweite Ventilelement (9) durch einen federnd in einer zum Membranteller (11) weisenden Richtung vorgespannten Ventilstößel (18) gebildet ist, der auf einer zum Membrantellerschaft (12) weisenden Stirnseite einen ersten Dichtsitz für das freie Ende des daran zur Anlage bringbaren Membrantellerschafts (12) aufweist, und
**dass** das dritte Ventilelement (10) durch ein Sockelelement (19) gebildet ist, das in einer zum Ventilstößel (18) weisenden Richtung federnd gegen einen zweiten Dichtsitz vorgespannt ist und durch axiale Verschiebung des am Sockelelement (19) zur Anlage gebrachten Ventilstößels (18) von dem zweiten Dichtsitz abhebbar ist.

8. Proportionalventil nach Anspruch 7,
**dadurch gekennzeichnet,**
**dass** der Positionssensor (31) mit einem in den Membranteller (11) integrierten Magnetelement (30) zusammenwirkt.

9. Proportionalventil nach einem der vorangehenden Patentansprüche,
**dadurch gekennzeichnet,**
**dass** eine den ersten und/oder zweiten Dichtsitz bildende und/oder hiermit zusammenwirkende Oberfläche (25, 28) zur Feinregulierung des Fluidstroms aus einem polymeren Material besteht.

10. Proportionalventil nach einem der vorangehenden Patentansprüche,
**dadurch gekennzeichnet,**
**dass** das Vorsteuerventil ein 3/2-Wegeventil ist.

11. Proportionalventil nach einem der vorangehenden Patentansprüche,
**dadurch gekennzeichnet,**
**dass** das Booster-Ventil ein 3/3-Wegeventil ist.

## Claims

1. A proportional valve (1), having a pilot control valve (2) that can be controlled by means of a control signal and having a booster valve (3) that can be actuated by means of the pilot control valve (2),
wherein the proportional valve (1) has a compressed-air connection (6) for connecting a compressed-air supply, a working connection (5), and an air-removal connection (4),
wherein the booster valve (3) has three valve elements (8, 9, 10), which are arranged one after the other and can each be moved in an axial direction against a spring force, namely
- a first valve element (8) actuated by the pilot control valve (2),
- a second valve element (9) actuated by the first valve element (2), and
- a third valve element (10) actuated by the second valve element (9),
wherein in a base position of the proportional valve (1), the first, second, and third valve elements (8, 9, 10) are spaced apart from each other in pairs, and, within the booster valve (3), a first sealing seat (26) effective between the first valve element (8) and the second valve element (9), and a second sealing seat (27) effective between the third valve element (10) and the housing (16) are designed and arranged in such a manner, that
when the control signal that controls the pilot control valve (2) is varied and an adjustment of the axial positions of the first, second, and third valve elements (8, 9, 10) is caused thereby in a cascaded manner, different switching states for removing air from and supplying air to the working connection (5) and for holding a pressure present at the working connection (5) can be set,
wherein furthermore, a position sensor (31) is provided that detects the axial position of the first valve element (8), and a control unit (36) of the proportional valve (1) is configured in such a manner that the measurement signal of the position sensor (31) is evaluated in order to calculate the control signal for the pilot control valve (2) that is required to achieve a desired switching state of the booster valve (2) .

2. The proportional valve according to claim 1, **characterized in that** the position sensor (31) is arranged for contactless measurement of the axial position of the first valve element.

3. The proportional valve according to claim 2, **characterized in that** the position sensor (31) is based on an optical, capacitive or magnetic measuring principle.

4. The proportional valve according to claim 3, **characterized in that** the position sensor (31) is a magnetic field angle sensor.

5. The proportional valve according to claim 4, **characterized in that** the position sensor (31) is an AMR, TMR or GMR sensor.

6. The proportional valve according to any one of the preceding claims, **characterized in that** the control unit (36) of the proportional valve (1) is configured in such a manner that the control signal required to achieve a desired switching state of the booster valve (3) is calculated for the pilot control valve (2) with exclusive recourse to the measuring signal of the position sensor (31).

7. The proportional valve according to any one of the preceding claims, **characterized in that** the first valve element (8) is formed by a diaphragm plate (11) with a diaphragm plate stem (12) extending in the axial direction and having an axial bore (13),
that the second valve element (9) is formed by a valve tappet (18) resiliently biased in a direction facing towards the diaphragm plate (11), which valve tappet has on an end face facing towards the diaphragm plate stem (12) a first sealing seat for the free end of the diaphragm plate shaft (12) which can be brought into contact therewith, and
that the third valve element (10) is formed by a base element (19) which is resiliently biased against a second sealing seat in a direction facing towards the valve tappet (18) and can be lifted off the second sealing seat by axially displacing the valve tappet (18) that is brought into contact with the base element (19).

8. The proportional valve according to claim 7, **characterized in that** the position sensor (31) cooperates with a magnetic element (30) integrated in the diaphragm plate (11).

9. The proportional valve according to any one of the preceding claims, **characterized in that** a surface (25, 28) forming the first and/or second sealing seat and/or cooperating therewith is made of a polymeric material for fine regulation of the fluid flow.

10. The proportional valve according to any one of the preceding claims, **characterized in that** the pilot control valve is a 3/2-way valve.

11. The proportional valve according to any one of the preceding claims, **characterized in that** the booster valve is a 3/3-way valve.

## Revendications

1. Vanne proportionnelle (1) comportant une vanne pilote pouvant être commandée par l'intermédiaire d'un signal de commande (2) et une soupape amplificatrice (3) pouvant être actionnée au moyen de la vanne pilote (2),
dans laquelle la vanne proportionnelle (1) présente un raccord d'air pressurisé (6) pour raccorder une alimentation d'air pressurisé, un raccord de travail (5) et un raccord d'aération (4),
dans laquelle la soupape amplificatrice (3) présente trois élément de soupape (8, 9, 10) branchés les uns après les autres et mobiles dans un sens contraire à une force de ressort respectivement dans une direction axiale, à savoir
- un premier élément de soupape (8) actionné par la vanne pilote (2),
- un deuxième élément de soupape (9), qui est actionné par le premier élément de soupape (2) et
- un troisième élément de soupape (10), qui est actionné par le deuxième élément de soupape (9),
dans lequel dans une position de base de la vanne proportionnelle (1) le premier, deuxième et troisième élément de soupape (8, 9, 10) sont réalisés et disposés par paires et espacée les uns des autres et à l'intérieur de la soupape amplificatrice (3) une première assise d'étanchéité (26) efficace entre le premier élément de soupape (8) et le deuxième élément de soupape (9) et une deuxième assise d'étanchéité (27) efficace entre le troisième élément de soupape (10) et le logement (16) sont réalisées et disposées,
dans laquelle en cas de variations du signal de commande commandant la vanne pilote (2) et du réglage ainsi provoqué en cascade des positions axiales du premier, deuxième et troisième élément de soupape (8, 9, 10) différents états de commutation pour ventiler et aérer le raccord de travail (5) et pour maintenir une pression prédominante sur le raccord de travail (5) peuvent être réglés, dans laquelle en outre un capteur de position (31) détectant la position axiale du premier élément de soupape (8) et une unité de commande (36) de la vanne proportionnelle (1) est conçue de telle sorte que pour calculer le signal de commande nécessaire pour obtenir un état de commutation souhaité de la soupape amplificatrice (2) pour la vanne pilote (2), le signal de mesure du capteur de position (31) est évalué.

2. Vanne proportionnelle selon la revendication 1, **caractérisée en ce que** le capteur de position (31) est conçu pour la mesure sans contact de la position axiale du premier élément de soupape.

3. Vanne proportionnelle selon la revendication 2, **caractérisée en ce que** le capteur de position (31) est basé sur un principe de mesure optique, capacitif ou magnétique.

4. Vanne proportionnelle selon la revendication 3, **caractérisée en ce que** le capteur de position (31) est un capteur d'angle de champ magnétique.

5. Vanne proportionnelle selon la revendication 4, **caractérisée en ce que** le capteur de position (31) est un capteur AMR, TMR ou GMR.

6. Vanne proportionnelle selon une des revendications précédentes, **caractérisée en ce que** l'unité de commande (36) de la vanne proportionnelle (1) est conçue de telle sorte que le signal de commande nécessaire pour obtenir un état de commutation souhaité de la soupape amplificatrice (3) pour la vanne pilote (2) est calculé en ayant exclusivement recours au signal de mesure du capteur de position (31) .

7. Vanne proportionnelle selon une des revendications précédentes, **caractérisée en ce que** le premier élément de soupape (8) est formé par un plateau de membrane (11) avec une tige de plateau de membrane (12) s'étendant dans la direction axiale et présentant un alésage axial (13), **en ce que** le deuxième élément de soupape (9) est formé par un poussoir de soupape (18) précontraint par ressort dans une direction tournée vers le plateau de membrane (11), qui présente sur un côté frontal tourné vers la tige de plateau de membrane (12) une première assise d'étanchéité pour l'extrémité libre de la tige de plateau de membrane (12) pouvant être positionnée sur celui-ci, et **en ce que** le troisième élément de soupape (10) est formé par un élément de socle (19), qui est précontraint contre une deuxième assise d'étanchéité dans une direction tournée vers le poussoir de soupape (18) et peut être soulevé par déplacement axial du poussoir de soupape (18) positionné sur l'élément de socle (19) par la deuxième assise d'étanchéité.

8. Vanne proportionnelle selon la revendication 7, **caractérisée en ce que** le capteur de position (31) coopère avec un élément d'aimant (30) intégré dans le plateau de membrane (11).

9. Vanne proportionnelle selon une des revendications précédentes, **caractérisée en ce que** une surface (25, 28) formant la première et/ou la deuxième assise d'étanchéité et/ou coopérant avec celle-ci pour la régulation précise du courant de fluide est constitué d'un matériau polymère.

10. Vanne proportionnelle selon une des revendications précédentes, **caractérisée en ce que** la vanne pilote est un distributeur à 3/2 voies.

11. Vanne proportionnelle selon une des revendications précédentes, **caractérisée en ce que** la vanne pilote est un distributeur à 3/3 voies.
